# EUROPÄISCHE PATENTANMELDUNG

(11) **EP 2 244 145 A1**
(43) Veröffentlichungstag der Anmeldung: **27.10.2010**
(21) Anmeldenummer: 09158264.3
(22) Anmeldetag: 20.04.2009
(51) Int. Cl.: G05B 19/401

(54) **Verfahren zur Endbearbeitung eines Teils und Fertigteil**

(71) Anmelder: Optima Holding AS, 3231 Sandefjord (NO)
(72) Erfinder: Lange, Wilhelm, 4639 Kristiansand S. (NO)
(74) Vertreter: Dreiss

(57) **Zusammenfassung**

Die Erfindung betrifft ein Verfahren zur Bearbeitung eines Fertigteils aus einem Rohteil, das mindestens eine mechanisch zu bearbeitende und eine Materialzugabe aufweisende Funktionsfläche umfasst, wobei das Verfahren einen virtuellen SOLL-Körper des Fertigteils aufweist, mit folgenden Verfahrensschritten:
- Erfassen der Geometrie des Rohteils und seiner räumlichen Lage in einer Werkzeugmaschine und Erstellen eines virtuellen IST-Körpers;
- Vorsehen einer virtuellen Zugabe beim virtuellen SOLL-Körper;
- Virtuelles Einpassen des virtuellen IST-Körpers in den virtuellen SOLL-Körper;
- Berechnen einer virtuellen Schnittmenge aus dem virtuellen IST-Körper und dem virtuellen SOLL-Körper, und Variieren der relativen Lage beider virtuellen Körper zueinander derart, dass die virtuelle Schnittmenge maximal ist.

## Beschreibung

### Beschreibung

Die Erfindung betrifft ein Verfahren zur Bearbeitung eines Fertigteils aus einem Rohteil gemäß Oberbegriff des Anspruchs 1 sowie ein Fertigteil, das nach dem Verfahren hergestellt worden ist. Die Erfindung betrifft auch ein Fertigteil.

Bei der Bearbeitung eines Rohteils zu Herstellung eines Fertigteils ist herstellungsbedingt mit Materialfehlern des Rohteils zu rechnen. Die Materialfehler können beispielsweise Sandeinschlüsse, Dross und Ähnliches umfassen. Die vorgesehene Materialzugabe ermöglicht es, kleinere Materialfehler im Zuge des Bearbeitens abzutragen, wodurch der Ausschuss reduzierbar ist. Bei größeren Materialfehlern ist dies jedoch nicht möglich, sodass die Funktionsflächen nicht die gewünschte Güte aufweisen und das Fertigteil Ausschuss bildet. Darüber hinaus gestaltet es sich als umständlich, das Rohteil in eine Werkzeugmaschine so einzuspannen, dass das Fertigteil vollständig im Rohteil enthalten ist, da Bezugspunkte, Einspannstellen, Messpunkte und Ähnliches von Rohteil zu Rohteil variieren. Trotz sorgfältigen Vermessens des Rohteils und einer genauen Anordnung des Rohteils in einer Werkzeugmaschine kann das Fertigteil theoretisch aus dem Rohteil herausragen, was bei einer mechanischen Bearbeitung zu Wanddickenunterschreitungen oder sogar zu Löchern im Fertigteil führt.

Der Erfindung liegt daher die Aufgabe zugrunde, ein Verfahren bereitzustellen, bei dem die o. g. Nachteile reduziert sind.

Diese Aufgabe wird mit einem erfindungsgemäßen Verfahren mit den Merkmalen des Anspruchs 1 gelöst.

Das Rohteil kann dabei ein Rundmaterial, Halbzeug oder Gussteil umfassen. Von diesem wird die Geometrie erfasst und ein virtueller IST-Körper erstellt. Der virtuelle IST-Körper stellt das tatsächliche individuelle Rohteil in Form dreidimensionaler Daten, insbesondere dreidimensionaler CAD-Daten, räumlich dar und ist als elektronischer Datensatz verfügbar. Dabei werden neben den dreidimensionalen Daten des Rohteils auch die Abstandsdaten und Lagedaten innerhalb der Werkzeugmaschine erfasst, so dass die exakte Positionierung des Rohteils in der Werkzeugmaschine im Datensatz vorliegt.

Der ebenfalls als 3D-Datensatz vorliegende, das Fertigteil definierende SOLL-Körper wird im Folgenden mit einer virtuellen Zugabe versehen. Diese virtuelle Zugabe wird insbesondere im Bereich der späteren Funktionsfläche vorgesehen und gewährleistet dadurch, dass diese in einem späteren Bearbeitungsgang mit einer hohen Oberflächengüte hergestellt werden kann.

Beide dreidimensionalen Datensätze, also der des virtuellen SOLL-Körpers und der des virtuellen IST- Körpers, werden virtuell ineinander eingepasst. Dabei wird der virtuelle SOLL-Körper auf Grundlage der erfassten Abstands- bzw. Lagedaten des IST-Körpers virtuell in den IST-Körper verschoben. Dazu findet ein Angleich der Bezugspunkte, und Einspannstellen statt. Durch das Variieren der relativen Lage beider virtueller Körper und das Berechnen der maximalen virtuellen Schnittmenge beider virtueller Körper wird gewährleistet, dass eine Wanddickenunterschreitung des Fertigteils nach der Bearbeitung des Rohteils minimiert ist. Besonders vorteilhaft bei dem erfindungsgemäßen Verfahren ist, dass die Lage des Fertigteils relativ zum Rohteil für die Bearbeitung optimiert ist.

Beim erfindungsgemäßen Verfahren wird der SOLL-Körper in den IST-Körper verschoben. Beide Verfahren erreichen jedoch nur die Verschiebung des SOLL-Körpers innerhalb einer Randlage des IST-Körpers. Um eine günstigere Zentrallage des SOLL-Körpers innerhalb des IST-Körpers zu erreichen, wird virtuell auf die Oberfläche des SOLL-Körpers (einschließlich der hinzugefügten Bearbeitungszugaben) eine nach außen hin, jedoch nach außen hin begrenzt durch die Oberfläche des IST-Körpers, streng monoton abnehmende Zusatzmasse hinzugefügt. Durch Maximierung der Gesamtmasse des so modifizierten IST-Körpers (d.h. Masse des IST-Körpers, plus Masse der Bearbeitungszugaben plus Zusatzmasse, welche nach außen hin streng abnehmend hinzugefügt wurde) wird die bessere Zentrallage erreicht. Eine Weiterführung des erfindungsgemäßen Verfahrens sieht vor, dass die virtuelle Schnittmenge aus den Volumen von IST-Körper und SOLL-Körper (mathematische UND-Verknüpfung) berechnet wird und dass die virtuelle Zugabe eine Volumenzugabe ist. Der IST-Körper und der SOLL-Körper werden also solange in ihrer Lage variiert, bis das Schnittmengenvolumen beider Körper maximal ist, das heißt, dass das spätere Fertigteil inklusive der Zugabe innerhalb des Rohteils liegt. Die Lagevariation beider Körper basiert insbesondere auf der Berechnung des totalen Differenzials beider Volumina, wobei die partiellen Ableitungen nach den drei Raumkoordinaten und den drei Lagewinkeln die Empfindlichkeit des Volumens bilden. Dabei werden insbesondere Gradientenverfahren eingesetzt.

Alternativ kann auch die Vereinigungsmenge der Volumina von IST-Körper und SOLL-Körper (mathematische ODER-Verknüpfung) minimiert werden. Wiederum wird so der SOLL-Körper in den IST-Körper verschoben. Beide Verfahren erreichen jedoch nur die Verschiebung des SOLL-Körpers innerhalb einer Randlage des IST-Körpers. Um eine günstigere Zentrallage des SOLL-Körpers innerhalb des IST-Körpers zu erreichen, wird virtuell auf die Oberfläche des SOLL-Körpers (einschließlich der hinzugefügten Bearbeitungszugaben) eine nach außen hin streng monoton abnehmende Zusatzmasse hinzugefügt, die jedoch nach außen hin begrenzt ist durch die Oberfläche des IST-Körpers. Durch Maximierung der Gesamtmasse des so modifizierten IST-Körpers (d.h. Masse des IST-Körpers, plus Masse der Bearbeitungszugaben plus Zusatzmasse, welche nach außen hin streng abnehmend hinzugefügt wurde) wird die bessere Zentrallage erreicht. Statt mit "Masse" kann auch mit "Volumen" gearbeitet werden. Es muss darauf geachtet werden, dass das außen hinzugefügte Volumen eine streng monoton abnehmende Gewichtung erhält. Der Massebegriff ist jedoch anschaulicher, da eine abnehmende Dichte der Masse leichter vorstellbar ist.

Eine weitere Variante des erfindungsgemäßen Verfahrens sieht vor, dass ein Materialfehler im Rohteil erfasst und im virtuellen IST-Körper abgebildet wird. Bei den Materialfehlern kann es sich insbesondere um Sandeinschluss oder um Dross handeln, die außerhalb kritischer Zonen, wie beispielsweise nahe der Oberfläche, liegen oder in hoch beanspruchten Zonen angeordnet sind. Unter einem Sandeinschluss wird verstanden, dass Sandpartikel im Zuge des Gießens, sofern es sich bei dem Rohteil um ein Gussteil handelt, im Gefüge oder an der Gussstückoberfläche des Rohteils eingeschlossen sind. Unter Dross wird verstanden, dass das Rohteil nicht-metallische Einschlüsse von unregelmäßiger Gestalt, beispielsweise Schlackehäutchen, aufweist. Dabei erweist es sich als vorteilhaft, wenn aufgrund der erfassten Materialfehler des Rohteils der virtuelle IST-Körper in eine Lage zum SOLL-Körper gebracht wird, in der der Materialfehler des virtuellen IST-Körpers außerhalb der Funktionsfläche oder außerhalb kritischer Zonen wie beispielsweise nahe der Oberfläche oder in hoch beanspruchten Zonen des virtuellen SOLL-Körpers angeordnet ist. Dadurch wird gewährleistet, dass die Funktionsfläche des Fertigteils eine hohe Oberflächengüte aufweisen kann. Liegt eine Vielzahl von Materialfehlern vor, so kann dahingehend optimiert werden, dass große Materialfehler außerhalb der Funktionsfläche oder außerhalb kritischer Zonen angeordnet werden. Eine Optimierung kann auch die Verschiebung eines Fehlers aus einer kritischen Zone in eine weniger kritische Zone bedeuten. Bei Gussteilen sind häufig bestimmte Lunker in Randlagen unzulässig, während gleichartige Lunker in Mittellagen der Wandungen von Gussteilen zulässig sind.

Es erweist sich ferner als vorteilhaft, wenn die relative Lage von SOLL-Körper zu IST-Körper maschinell und/oder manuell variiert wird. Von besonderem Vorteil ist, dass aufgrund des maschinellen Variierens der SOLL-Körper und der IST-Körper in der Werkzeugmaschine automatisiert ineinander eingepasst werden. Ein zusätzliches, manuelles Variieren ermöglicht einem Benutzer, den SOLL-Körper und den IST-Körper zu variieren, wenn beispielsweise ein maschinelles Variieren nicht möglich ist. Dieses kann genau dann der Fall sein, wenn das Rohteil eine Mehrzahl an Materialfehlern aufweist, die derart ungünstig verteilt sind, dass eine optimale Lage beider Körper nicht möglich ist und die maschinelle Optimierung keine Lösung mehr findet. Dabei erweist es sich als vorteilhaft, wenn eine CAD-Schnittstelle vorgesehen ist. Diese ermöglicht es zum einen, das Rohteil beispielsweise in einer CNC-Werkzeugmaschine zu bearbeiten, zum anderen können kritische Bereiche visuell aufgezeigt werden. Letzteres ermöglicht eine differenzierte Bewertung der Materialfehler und erlaubt ein manuelles Variieren der Lage beider Körper.

Die Geometrie des Rohteils kann beispielsweise durch Abtasten verschiedener Bezugspunkte erfolgen und die Materialfehler beispielsweise durch Ultraschallverfahren oder Röntgen erfasst werden. Bevorzugt wird jedoch eine Weiterentwicklung des Verfahrens, bei der die äußere Geometrie des Rohkörpers durch einen Scanner erfasst wird. Dies erlaubt ein kostengünstiges und schnelles Erfassen der Geometrie des Rohkörpers. Vorteilhafterweise wird der Scanner dabei durch einen Roboter geführt, wodurch der IST-Körper im eingespannten Zustand gescannt werden kann, also nach dem Scannen nicht neu eingespannt werden muss. Dadurch ist die Genauigkeit erhöht.

Die Aufgabe wird ferner mit einem Fertigteil gelöst, das nach einem Verfahren, wie es oben beschrieben wurde, aus einem Rohteil hergestellt wird. Dadurch ist gewährleistet, dass die Funktionsfläche des Fertigteils eine hohe Oberflächengüte und eine hohe Geometriegenauigkeit aufweist.

Schließlich sieht ein Ausführungsbeispiel vor, dass das Rohteil ein Gussteil ist. Von besonderem Vorteil ist dabei, dass das erfindungsgemäße Verfahren bei einem Rohteil Anwendung findet, bei dem herstellungsbedingt Materialfehler auftreten, wobei durch die Anwendung des erfindungsgemäßen Verfahrens eine hohe Geometrietreue und Oberflächenqualität der Funktionsfläche gewährleistet ist.

Weitere Merkmale, Einzelheiten und Vorteile der Erfindung ergeben sich aus den Patentansprüchen, der Zeichnung und nachfolgenden Beschreibung bevorzugter Ausführungsformen der Erfindung.

In der Zeichnung zeigen:

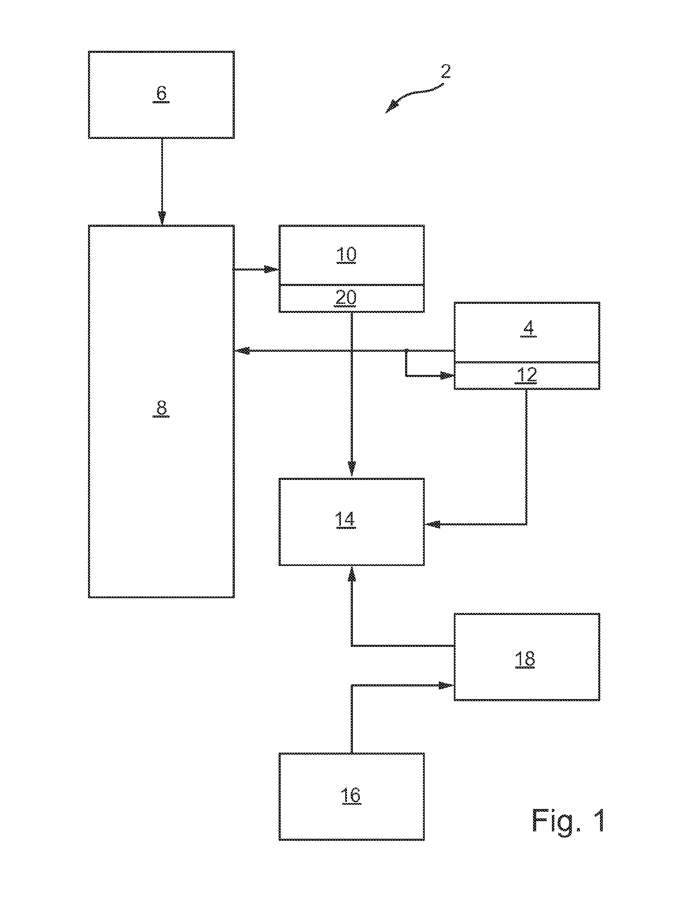

- Figur 1: eine schematische Darstellung des erfindungsgemäßen Verfahrens; und
- Figuren 2a bis 2c: eine schematische Darstellung einzelner Verfahrensschritte.

Die Zeichnung zeigt schematisch ein Verfahren 2 zur Bearbeitung eines Fertigteils. Das Fertigteil wird aus einem Rohteil 3 bearbeitet, das mindestens eine mechanisch zu bearbeitende und eine Materialzugabe 5 aufweisende Funktionsfläche umfasst. Das Verfahren 2 verwendet einen virtuellen SOLL-Körper 4, der als 3D-Datensatz, insbesondere als 3D-CAD-Datensatz elektronisch gespeichert ist. Der SOLL-Körper 4 ist dabei ein virtuelles Abbild des späteren Fertigteils, welches das Ergebnis der Bearbeitung darstellt. In einem ersten Verfahrensschritt wird die Geometrie des Rohteils 3 sowie dessen räumliche Lage innerhalb einer Werkzeugmaschine erfasst, beispielsweise durch einen Scanner 6. Die erfassten Daten werden an eine Datenverarbeitungsanlage 8 übergeben und dort als IST-Körper 10 hinterlegt. Die Datenverarbeitungsanlage 8 sieht in einem Folgeschritt eine virtuelle Zugabe 12 beim SOLL-Körpers 4 vor. Virtueller IST-Körper 10 und virtueller SOLL-Körper 4 werden nun virtuell ineinander eingepasst. Dazu wird der SOLL-Körper 4 anhand der erfassten räumlichen Lage des IST-Körpers 10 virtuell in diese räumliche Lage verschoben, so dass SOLL-Körper 4 und IST-Körper 10 ineinander liegen.

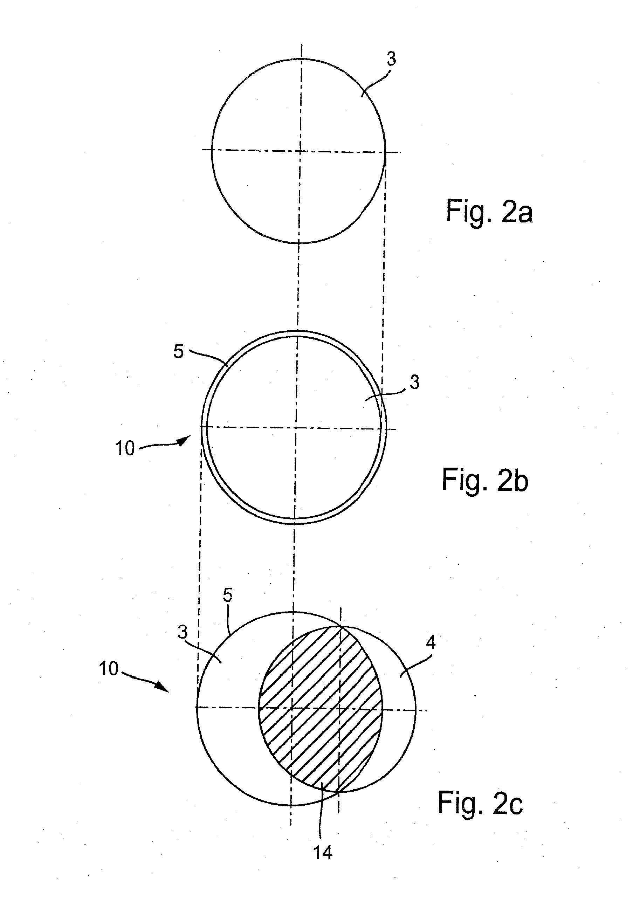

Die Figuren 2a bis 2c stellen schematisch diese Verfahrensschritte dar. In Figur 2a wird die Geometrie des Rohteils 3 sowie dessen Lage im Raum erfasst. Virtuell wird gemäß Figur 2 das Rohteil 3 im Folgenden mit einer virtuellen Materialzugabe 5 versehen, wobei die virtuelle Materialzugabe 5 eine virtuelle Volumenzugabe oder Massenzugabe ist. Hierdurch wird der IST-Körper 10 gebildet. Figur 2c zeigt, dass anschließend der SOLL-Körper 4 in den IST-Körper 10 eingefügt wird, wobei beide Körper 4,10 nur teilweise ineinander liegen und eine Schnittmenge 14 bilden.

Mittels der Datenverarbeitungsanlage 8 wird die virtuelle Schnittmenge 14 virtuell gebildet. SOLL-Körper 4 und IST-Körper 10 werden derart in ihrer relativen Lage zueinander variiert, dass die virtuelle Schnittmenge 14 maximal ist.

Die Schnittmenge 14 kann dabei unter Verwendung der Datenverarbeitungsanlage 8 maschinell gebildet werden. Es besteht allerdings auch die Möglichkeit, dass ein Anwender 16 über die Verwendung einer CAD-Schnittstelle 18 IST-Körper 10 und SOLL-Körper 4 manuell variiert.

Herstellungsbedingt kann der IST-Körper 10 Materialfehler 20 aufweisen, die beim Scannen des Rohteils 3 mittels des Scanners 6 erfasst werden und im IST-Körper 10 virtuell dargestellt sind. Beim Bilden der Schnittmenge 14 des IST-Körpers 10 und des SOLL-Körpers 4 werden die Materialfehler 20 von der Datenverarbeitungsanlage 8 berücksichtigt, so dass der IST-Körper 10 relativ zum SOLL-Körper 4 so positioniert wird, dass die Funktionsfläche keine oder nur eine geringe Anzahl von Materialfehlern 20 aufweist und/oder die Materialfehler im SOLL-Körper nur noch eine geringere und somit unkritische Größe aufweisen.

Durch das erfindungsgemäße Verfahren 2 kann ein Fertigteil mit besonders hoher Oberflächenqualität im Bereich der Funktionsflächen bearbeitet werden.

## Patentansprüche

1. Verfahren (2) zur Bearbeitung eines Fertigteils aus einem Rohteil (3), das mindestens eine mechanisch zu bearbeitende und eine Materialzugabe (5) aufweisende Funktionsfläche umfasst, wobei das Verfahren einen virtuellen SOLL-Körper (4) des Fertigteils aufweist, mit folgenden Verfahrensschritten:
a. Erfassen der Geometrie des Rohteils (3) und ggfls. seiner räumlichen Lage in einer Werkzeugmaschine und Erstellen eines virtuellen IST-Körpers (10);
b. Vorsehen einer virtuellen Zugabe (12) beim virtuellen SOLL-Körper (4);
c. Virtuelles Einpassen des virtuellen SOLL-Körpers (10) in den virtuellen IST-Körper (4); und
i. Berechnen einer virtuellen Schnittmenge (14) (mathematische UND-Verknüpfung) aus dem virtuellen IST-Körper (10) und dem virtuellen SOLL-Körper (4), und Variieren der relativen Lage beider virtuellen Körper (4, 10) zueinander derart, dass die virtuelle Schnittmenge (14) maximal ist; oder
ii. Berechnen einer virtuellen Vereinigungsmenge (mathematische ODER-Verknüpfung) aus dem virtuellen IST-Körper (10) und dem virtuellen SOLL-Körper (4), und Variieren der relativen Lage beider virtuellen Körper (4, 10) zueinander derart, dass die virtuelle Schnittmenge (14) minimal ist.

2. Verfahren nach Anspruch 1, **dadurch gekennzeichnet, dass** virtuell auf die Oberfläche des SOLL-Körpers eine nach außen hin streng monoton abnehmende Zusatzmasse hinzugefügt wird, wobei die Zusatzmasse innerhalb des IST-Körpers liegt.

3. Verfahren nach Anspruch 2, **dadurch gekennzeichnet, dass** die Gesamtmasse des so modifizierten IST-Körpers, nämlich die Masse des IST-Körpers, plus Masse der Bearbeitungszugaben plus Zusatzmasse, welche nach außen hin streng abnehmend hinzugefügt wurde, maximiert wird.

4. Verfahren nach einem der vorhergehenden Ansprüche, **dadurch gekennzeichnet, dass** die virtuelle Schnittmenge (14) aus den Volumen von IST-Körper (10) und SOLL-Körper (4) berechnet wird und dass die virtuelle Zugabe (12) eine Volumenzugabe ist.

5. Verfahren nach einem der vorhergehenden Ansprüche, **dadurch gekennzeichnet, dass** die Schnittmenge (14) aus den Massen von IST-Körper (10) und SOLL-Körper (4) berechnet wird und dass die virtuelle Zugabe (12) eine Massenzugabe ist.

6. Verfahren nach einem der vorhergehenden Ansprüche, **dadurch gekennzeichnet, dass** ein Materialfehler (20) im Rohteil (3) erfasst und im virtuellen IST-Körper (10) abgebildet wird.

7. Verfahren nach Anspruch 6, **dadurch gekennzeichnet, dass** der virtuelle IST-Körper (10) in eine Lage zum SOLL-Körper (4) gebracht wird, in der der Materialfehler (20) des virtuellen IST-Körpers (10) außerhalb der Funktionsfläche des virtuellen SOLL-Körpers (4) angeordnet ist.

8. Verfahren nach einem der vorhergehenden Ansprüche, **dadurch gekennzeichnet, dass** die relative Lage von SOLL-Körper (4) zu IST-Körper (10) maschinell und/oder manuell variiert wird.

9. Verfahren nach einem der vorhergehenden Ansprüche, **dadurch gekennzeichnet, dass** eine CAD-Schnittstelle (18) vorgesehen ist.

10. Verfahren nach einem der vorhergehenden Ansprüche, **dadurch gekennzeichnet, dass** die Geometrie des Rohteils (3) durch einen Scanner (6) erfasst wird.

11. Verfahren nach Anspruch 10, **dadurch gekennzeichnet, dass** der Scanner (6) durch einen Roboter geführt wird.

12. Fertigteil, **dadurch gekennzeichnet, dass** es aus einem Rohteil (3) nach einem Verfahren der Ansprüche 1 bis 11 bearbeitet ist und insbesondere ein Gussteil umfasst.
